# EUROPÄISCHE PATENTSCHRIFT

(11) **EP 1 785 295 B1**
(45) Veröffentlichungstag und Bekanntmachung des Hinweises auf die Patenterteilung: **15.04.2009**
(21) Anmeldenummer: 06023283.2
(22) Anmeldetag: 09.11.2006
(51) Int. Cl.: B60G 21/055

(54) **Verstellbarer Stabilisator**
Adjustable stabilizer bar
Barre antiroulis réglable

(30) Priorität: 15.11.2005 DE 102005054798
(43) Veröffentlichungstag der Anmeldung: 16.05.2007
(73) Patentinhaber: ZF Friedrichshafen AG, 88046 Friedrichshafen (DE)
(72) Erfinder: Kühnel, Joachim, 97456 Dittelbrunn (DE)

(56) Entgegenhaltungen:
- EP-A- 1 541 394
- EP-A2- 1 314 588
- WO-A-20/04037573
- WO-A-20/06060356
- JP-A- 2005 271 828
- US-B1- 6 425 585
- US-B1- 6 428 019

## Beschreibung

Die Erfindung betrifft einen verstellbaren Stabilisator gemäß dem Oberbegriff von Patentanspruch 1.

Ein verstellbarer Stabilisator verfügt über mehrere Stabilisatorabschnitte, deren Winkelstellung zueinander bezogen auf eine Drehachse über einen Aktuator verstellen kann. Die Abstützkraft folgt der Funktion F = f (ϕ). Grundsätzlich sind für den Aktuator verschiedene Konzepte bekannt. Man kann einen hydraulischen oder pneumatischen Schwenkmotor verwenden, wie z. B. in der DE 44 42 223 A1 offenbart ist. Alternativ kann man auch Aktuatoren in der Bauform eines E-Motors verwenden. Beispielhaft ist die DE 10 2004 004 335 A1 zu nennen.

Unabhängig von dem Aktuatorbauweise muss sichergestellt werden, dass bei Ausfall der Energieversorgung des Aktuators eine Mindestabstützkraft zumindest über einen gewissen Zeitraum zur Verfügung steht, damit sich das Fahrverhalten des Fahrzeugs nicht schlagartig ändert und für einen Durchschnittsfahrer unkontrollierbar wird.

Bei einem mit Druckmittel versorgten Schwenkmotor besteht die Möglichkeit, schaltungstechnisch eine Notbetrieblösung vorzusehen. Es wird auf die DE 196 13 769 A1 oder die DE 195 49 385 A1 verwiesen.

Für einen Aktuator auf der Basis eines E-Motors sind zwei Konzepte für eine Notbetrieblösung bekannt. Die DE 102 57 211 A1 beschreibt einen geteilten Kraftfahrzeugstabilisator mit einem elektromechanischen Aktuator, der durch eine Kurzschluss-Schaltung in einen Generatorbetrieb umgeschaltet werden kann. Es liegt keine mechanische Blockierung des zweigeteilten Stabilisators vor, sondern eine der Verdrehbewegung entgegengesetzt gerichtete elektrische Widerstandskraft.

Die gattungsbildende EP 1 030 790 B1 (DE 198 46 275 A1) betrifft ein System und Verfahren zur Wankstabilisierung von Fahrzeugen, bei dem im Notbetrieb die beiden Stabilisatorhälften mittels einer elektromechanische Bremse miteinander verbunden sind.

In der EP 1 030 790 B1 wird darauf hingewiesen, dass bei einer elektromechanischen Bremse nach einer Kurvenfahrt eine Schrägstellung des Fahrzeugaufbaus bei anschließender Geradeausfahrt durch geeignete Maßnahmen sichergestellt wird.

Aus der WO 2004037573 ist ein verstellbarer Stabilisator umfassend zwei Stabilisatorabschnitte bekannt, die mittels eines Aktuators unter Verwendung eines Getriebes zueinander verdrehbeweglich gelagert sind. Eine Fall-Safe-Einrichtung sorgt dafür, dass die Stabilisatorabschnitte bedarfweise in einer einzigen Winkelposition blockierbar sind.

In der JP 2005 271828 ist ein Stabilisator mit zwei Stabilisatorabschnitten offenbart, die über einen Aktuator in Verbindung mit einem Getriebe gekoppelt sind. Das Getriebe ist mittels einer Kupplung blockierbar ausgeführt.

Aufgabe der vorliegenden Erfindung ist es einen verstellbaren Stabilisator derart weiterzuentwickeln, dass einerseits in etwa die Abstützkraft eines passiven Stabilisators erreicht und andererseits eine unerwünschte Schräglage des Fahrzeugaufbaus vermieden wird.

Eine erste Lösung der Aufgabe wird durch den Patentanspruch 1 beschrieben. Eine Alternatiwariante beschreibt der Patentanspruch 7.

Der große Vorteil besteht darin, dass man für die Aktivierung der Blockiereinrichtung kein Steuergerät benötigt, das selbst Ursache für eine Fehlfunktion des Gesamtsystems sein kann.

Weitere vorteilhafte Ausgestaltungen werden in den Unteransprüchen beschrieben.

Anhand der folgenden Figurenbeschreibung soll die Erfindung näher erläutert werden. Es zeigt:
- Fig. 1: Stabilisator mit einer Blockiereinrichtung, bei der die axiale Position einer Spindelmutter zur Erkennung der Indexlage verwendet wird
- Fig. 2 - 4: Blockiereinrichtung, bei der die Winkelstellung eines Winkelgebers erfasst wird

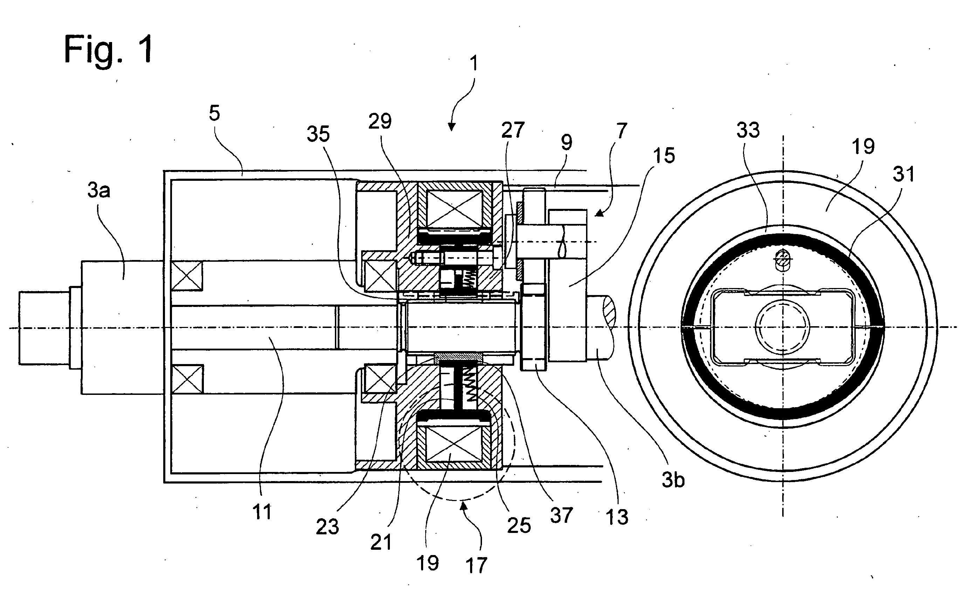

Die Figur 1 zeigt einen mittels eines Aktuators 1 in seiner Stützkraft verstellbaren Stabilisator 3. Der Stabilisator umfasst mindestens zwei Stabilisatorabschnitte 3a;3b, die jeweils mit dem Aktuator verbunden sind, wobei der Aktuator als druckmittelbetriebener Schwenkmotor oder auch als E-Motor ausgeführt sein kann. Ein erster Stabilisatorabschnitt 3a ist direkt an ein Gehäuse 5 des Aktuators 1 angeschlossen, z. B. angeschraubt oder je nach Materialeigenschaften des Stabilisators angeschweißt, oder verbunden durch eine beliebige Formschlussverbindung. Ein zweiter Stabilisatorabschnitt 3a steht in Wirkverbindung mit einem Getriebe 7. Das Getriebe ist für die Erfindung nicht zwingend notwendig, sondern dient zur Reduzierung des notwendigen Antriebsdrehmoments des Aktuators. Beispielhaft kommt ein Getriebe in der Bauform eines Planetenradgetriebes zur Anwendung. Der Innendurchmesser des Gehäuses bildet das Hohlrad 9 und eine Rotorwelle 11 des Aktuators trägt ein Sonnenrad 13. Der Stabilisatorabschnitt 3b ist mit einem Planetenradträger 15 verbunden.

Bei einer Geradeausfahrt kann der Stabilisatorabschnitt 3b zusammen mit der Rotorwelle 11 eine abgesehen von Reibkräften im Getriebe und in den Lagern ungebremste rotatorische Relativbewegung zum Gehäuse 5 und damit zum Stabilisatorabschnitt 3a ausführten. Soll der Stabilisator eine Abstützkraft ausüben, dann wird durch Energiezufuhr in der Form von Druckmedium oder elektrischen Strom der Aktuator eingesetzt, der die beiden Stabilisatorhälften 3a;3b gegeneinander verdreht.

Der Aktuator 1 verfügt über eine Blockiereinrichtung 17 für einen Notbetrieb des verstellbaren Stabilisators 3. Die Blockiereinrichtung umfasst eine Stelleinrichtung 19, die nur bei einer neutralen Indexstellung der beiden Stabilisatorabschnitte die Blockierschaltstellung einnehmen kann. Dazu kann mittels der Stelleinrichtung, die von einer um die Längsachse des Stabilisators ausgerichtete Ringspule 19 gebildet wird, mindestens ein Stellelement 21 radial in eine auf der Rotorwelle 11 verdrehgesichert gelagerten Spindelmutter 23, die ein Spindelgetriebe bilden, eingreifen und bei Erreichen der neutralen Indexstellung einen Formschluss eingehen. Das Stellelement kann ggf. von mindestens einem Federelement 25 in Richtung der Rotorwelle 11 vorgespannt sein. Das Stellelement 21 wird seitlich von Seitenteilen 27;29 gegen eine Axialbewegung bezogen auf die Rotorwelle gesichert. Das Stellelement weist in Richtung der Ringspule eine gekrümmte Oberfläche 31 auf und begrenzt damit einen sichelförmigen Luftspalt 33 zur Ringspule, so dass aufgrund des Luftspalts eine besonders gute Stellkraft-Weg-Funktion erreicht werden kann. Ein Gewinde 35 auf der Rotorwelle ist in der Länge unter Berücksichtigung der Übersetzung 13 des Getriebes derart bemessen, dass eine Drehbewegung des Sonnenrades in eine axiale Verschiebebewegung der Spindelmutter 23 umgesetzt wird. Die axiale Position der Spindelmutter auf der Rotorwelle dient als eine die Winkelstellung des Stabilisatorsabschnitts repräsentierende Größe für die Blockiereinrichtung 17.

Die Achsgeometrie bestimmt den maximalen Ein- und Ausfederungsweg des Rades und damit auch den Schwenkwinkel zwischen den beiden Stabilisatorhälften 3a;3b. Das Getriebe 7 zwischen dem Stabilisatorabschnitt und der Rotorwelle führt jedoch dazu, dass der maximale Schwenkmotor einem Verdrehwinkel der Rotorwelle > 360° entspricht. Deshalb ist die Spindelmutter 23 auf der Rotorwelle 11 für das Stellelement 21 mit einem Aufnahmeprofil 37 versehen, das nur bei einer definierten axialen Position der Spindelmutter zum Stellelement einen Formschluss zwischen diesen beiden Bauteilen zulässt. Liegt die Winkelstellung der Spindelmutter entsprechend einer horizontalen Fahrzeugaufbaustellung noch nicht vor, dann kann das Stellelement 21 nicht in die Spindelmutter 23 eingreifen.

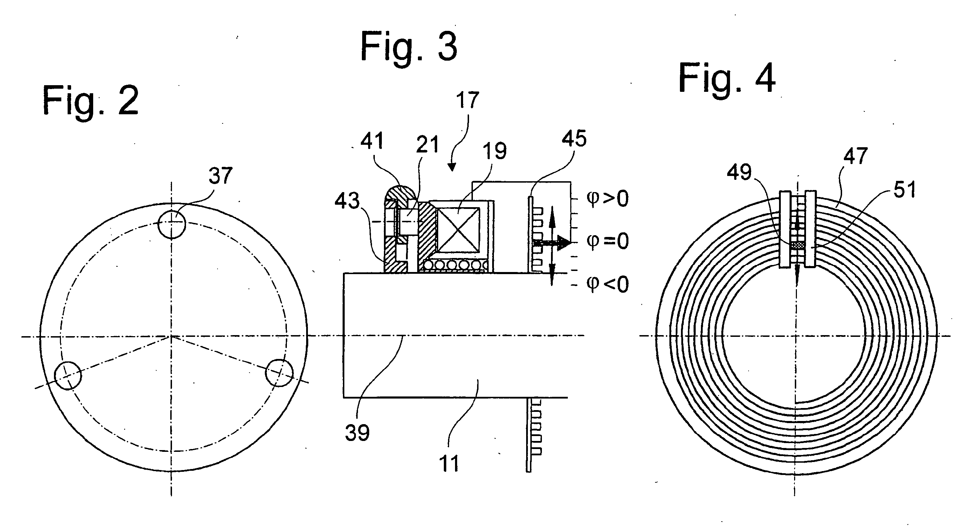

Die Figuren 2, 3 und 4 zeigen eine Alternativvariante zur Fig. 1. Abweichend weist die elektromagnetische Blockiereinrichtung 17 mindestens ein parallel zur Stabilisatorachse 39 wirksame Stellelement 21 auf. Die Blockereinrichtung umfasst des weiteren einen gehäusefesten Reaktionsring 41 und eine rotorseitige Sperrscheibe 43. In der Speerscheibe ist mindestens eine Aufnahme für einen Blockierbolzen als Stellelement 21 ausgeführt. Beim Einsatz eines Getriebes zwischen dem Stabilisatorelement und der Rotorwelle kann die dargestellte Winkelstellung der Sperrscheibe 43 mehrfach auftreten. Deshalb ist auf der Rotorwelle und damit drehfest in Wirkverbindung mit dem Stabilisatorabschnitt 36 ein Winkelgeber 45 in der Bauform einer archimedischen Spirale fixiert. In einer Spiralnut 47 ist ein Taster 49 angeordnet, der in Umfangsrichtung von seitlichen Anschlägen, die z. B. am Gehäuse befestigt sind, geführt ist. Eine Drehbewegung des Winkelgebers führt zu einer Radialbewegung des Tasters 49. Der Winkelgeber und die Sperrscheibe sind zueinander in Umfangsrichtung zur Rotorwelle ausgerichtet, so dass bei einer Indexlage ϕ = 0° die Blockiereinrichtung aufgrund des Signals des Winkelgebers 45 ausgelöst und der mindestens eine Blockierbolzen in die Sperrscheibe eingreifen kann.

## Patentansprüche

1. Verstellbarer Stabilisator (3), umfassend zwei Stabilisatorabschnitte (3a; 3b), die mittels eines Aktuators (1) unter Verwendung eines Getriebes (7) zueinander verdrehbeweglich gelagert sind, wobei der Stabilisator (3) Mittel (17) zur Blockierung der gegenseitigen Verschwenkung der Stabilisatorabschnitte (3a; 3b) in einer neutralen Indexstellung aufweist und die Blockiereinrichtung (17) eine Stelleinrichtung (19) umfasst, die nur bei einer definierten Winkelstellung der beiden Stabilisatorenden (3a; 3b) eine Blockierschaltstellung einnimmt, indem eine Position einer die Winkelstellung repräsentierende Größe eines Winkelgebers von der Blockiereinrichtung erfasst wird,
**dadurch gekennzeichnet,**
**dass** die Blockiereinrichtung (17) ein Spindelgetriebe mit einer Spindel (11; 35) und einer Spindelmutter (23) umfasst und eine Stelleinrichtung (19; 21) der Blockiereinrichtung mit der Spindelmutter (23) bei Erreichen der Indexstellung eine Formschlussverbindung eingeht, und dass das Spindelgetriebe auf der Rotorwelle (11) des Aktuators (1) angeordnet ist.

2. Verstellbarer Stabilisator nach Anspruch 1,
**dadurch gekennzeichnet,**
**dass** die Stelleinrichtung von einer Spule (19) gebildet wird, die ein Stellelement (21) radial zu einer Rotorwelle (11) des Aktuators (1) ansteuert.

3. Verstellbarer Stabilisator nach Anspruch 2,
**dadurch gekennzeichnet,**
**dass** die Spule (19) als eine Ringspule um die Längsachse des Stabilisators (3a; 3b) ausgeführt ist.

4. Verstellbarer Stabilisator nach Anspruch 1,
**dadurch gekennzeichnet,**
**dass** das Stellelement (21) seitlich von Seitenteilen (27; 29) der Blockiereinrichtung (17) gegen eine Axialbewegung bezogen auf die Rotorwelle (11) gesichert wird.

5. Verstellbarer Stabilisator nach Anspruch 3,
**dadurch gekennzeichnet,**
**dass** das Stellelement (21) in Richtung der Spule (19) eine gekrümmte Oberfläche (31) aufweist und zur Spule einen sichelförmigen Luftspalt (33) begrenzt.

6. Verstellbarer Stabilisator nach Anspruch 2,
**dadurch gekennzeichnet,**
**dass** das Stellelement (21) von mindestens einem Federelement (25) in Richtung der Längsachse des Stabilisators (3a; 3b) vorgespannt ist.

7. Verstellbarer Stabilisator nach dem Oberbegriff von Anspruch 1,
**dadurch gekennzeichnet,**
**dass** ein Winkelgeber (45) der Blockiereinrichtung (17) drehfest in Wirkverbindung mit dem Stabilisatorelement (3b) steht und einen Taster (49) aufweist, der bei einer Drehbewegung des Winkelgebers (45) eine Radialbewegung ausführt und bei Erreichen der Neutralstellung ein Signal für die Blockiereinrichtung (17) bereitstellt und dass die Blockiereinrichtung (17) ein parallel zur Stabilisatorachse (3a;3b) wirksames Stellelement (21) aufweist, das in eine mit dem Stabilisator in Wirkverbindung stehende Sperrscheibe (43) eingreift und dass die Sperrscheibe (43) und der Winkelgeber (45) auf der Rotorwelle (11) des Aktuators (1) angeordnet sind.

8. Verstellbarer Stabilisator nach Anspruch 7,
**dadurch gekennzeichnet,**
**dass** der Winkelgeber (45) eine Spiralnut (47) in der Form einer archimedischen Spirale aufweist und der Taster (49) in der Spiralnut (47) von seitlichen Anschlägen (51) geführt wird.

## Claims

1. Adjustable anti-roll bar (3), comprising two anti-roll bar sections (3a; 3b) which are mounted such that they can be moved rotationally with respect to one another by means of an actuator (1) with the use of a gear mechanism (7), the anti-roll bar (3) having means (17) for locking the mutual pivoting of the anti-roll bar sections (3a; 3b) in a neutral index position and the locking device (17) comprising an actuating device (19) which assumes a locking switching position only in a defined angular position of the two anti-roll bar ends (3a; 3b) by a position of a variable of an angle signal transmitter being detected by the locking device, which variable represents the angular position, **characterized in that** the locking device (17) comprises a spindle gear mechanism having a spindle (11; 35) and a spindle nut (23), and an actuating device (19; 21) of the locking device entering a positive connection with the spindle nut (23) when the index position is reached, and **in that** the spindle gear mechanism is arranged on the rotor shaft (11) of the actuator (1).

2. Adjustable anti-roll bar according to Claim 1, **characterized in that** the actuating device is formed by a coil (19) which actuates an actuating element (21) radially with respect to a rotor shaft (11) of the actuator (1).

3. Adjustable anti-roll bar according to Claim 2, **characterized in that** the coil (19) is configured as a toroid coil about the longitudinal axis of the anti-roll bar (3a; 3b).

4. Adjustable anti-roll bar according to Claim 1, **characterized in that** the actuating element (21) is secured laterally by side parts (27; 29) of the locking device (17) against an axial movement in relation to the rotor shaft (11).

5. Adjustable anti-roll bar according to Claim 3, **characterized in that** the actuating element (21) has a curved surface (31) in the direction of the coil (19) and delimits a crescent-shaped air gap (33) with respect to the coil.

6. Adjustable anti-roll bar according to Claim 2, **characterized in that** the actuating element (21) is prestressed by at least one spring element (25) in the direction of the longitudinal axis of the anti-roll bar (3a; 3b).

7. Adjustable anti-roll bar according to the precharacterizing clause of claim 1, **characterized in that** an angle signal transmitter (45) of the locking device (17) is operatively connected to the anti-roll bar element (3b) in a rotationally fixed manner and has a probe (49) which carries out a radial movement in the case of a rotational movement of the angle signal transmitter (45) and provides a signal for the locking device (17) when the neutral position is reached, and **in that** the locking device (17) has an actuating element (21) which acts parallel to the anti-roll bar axis (3a; 3b) and engages into a locking disc (43) which is operatively connected to the anti-roll bar, and **in that** the locking disc (43) and the angle signal transmitter (45) are arranged on the rotor shaft (11) of the actuator (1).

8. Adjustable anti-roll bar according to Claim 7, **characterized in that** the angle signal transmitter (45) has a spiral groove (47) in the form of a spiral of Archimedes and the probe (49) is guided in the spiral groove (47) by lateral stops (51).

## Revendications

1. Stabilisateur réglable (3), comprenant deux portions de stabilisateur (3a ; 3b), qui sont montées de manière mobile en rotation l'une par rapport à l'autre en utilisant une transmission (7) au moyen d'un actionneur (1), le stabilisateur (3) présentant des moyens (17) pour bloquer le pivotement mutuel des portions de stabilisateur (3a ; 3b) dans une position d'indice neutre, et le dispositif de blocage (17) présentant un dispositif de commande (19), qui adopte une position de commutation de blocage uniquement pour une position angulaire définie des deux extrémités de stabilisateur (3a ; 3b), en ce qu'une position d'une valeur d'un capteur angulaire, représentant la position angulaire est détectée par le dispositif de blocage,
**caractérisé en ce que**
le dispositif de blocage (17) comprend un mécanisme à broche avec une broche (11 ; 35) et un écrou à broche (23), et un dispositif de commande (19 ; 21) du dispositif de blocage avec l'écrou à broche (23) entre en liaison par correspondance géométrique lorsqu'il atteint la position d'indice, et **en ce que** le mécanisme à broche est disposé sur l'arbre de rotor (11) de l'actionneur (1).

2. Stabilisateur réglable selon la revendication 1,
**caractérisé en ce que**
le dispositif de commande est formé par une bobine (19) qui commande un élément de commande (21) radialement par rapport à un arbre de rotor (11) de l'actionneur (1).

3. Stabilisateur réglable selon la revendication 2,
**caractérisé en ce que**
la bobine (19) est réalisée sous forme de bobine annulaire autour de l'axe longitudinal du stabilisateur (3a ; 3b).

4. Stabilisateur réglable selon la revendication 1,
**caractérisé en ce que**
l'élément de commande (21) est fixé latéralement par des parties latérales (27 ; 29) du dispositif de blocage (17) contre tout mouvement axial par rapport à l'arbre de rotor (11).

5. Stabilisateur réglable selon la revendication 3,
**caractérisé en ce que**
l'élément de commande (21) présente, dans la direction de la bobine (19), une surface courbe (31) et délimite un entrefer en forme de croissant (33) par rapport à la bobine.

6. Stabilisateur réglable selon la revendication 2,
**caractérisé en ce que**
l'élément de commande (21) est précontraint par au moins un élément de ressort (25) dans la direction de l'axe longitudinal du stabilisateur (3a ; 3b).

7. Stabilisateur réglable selon le préambule de la revendication 1,
**caractérisé en ce**
**qu'**un capteur angulaire (45) du dispositif de blocage (17) est en liaison fonctionnelle de manière solidaire en rotation avec l'élément de stabilisateur (3b), et présente un palpeur (49), qui, en cas de mouvement de rotation du capteur angulaire (45), effectue un mouvement radial, et à l'obtention de la position neutre, fournit un signal pour le dispositif de blocage (17), et en ce que le dispositif de blocage (17) présente un élément de commande (21) agissant parallèlement à l'axe du stabilisateur (3a ; 3b), lequel vient en prise dans un disque de blocage (43) en liaison fonctionnelle avec le stabilisateur, et en ce que le disque de blocage (43) et le capteur angulaire (45) sont disposés sur l'arbre de rotor (11) de l'actionneur (1).

8. Stabilisateur réglable selon la revendication 7,
**caractérisé en ce que**
le capteur angulaire (45) présente une rainure en spirale (47) en forme de spirale d'Archimède et le palpeur (49) est guidé dans la rainure en spirale (47) par des butées latérales (51).
